# EUROPÄISCHE PATENTANMELDUNG

(11) **EP 0 866 428 A2**
(43) Veröffentlichungstag der Anmeldung: **23.09.1998**
(21) Anmeldenummer: 98103088.5
(22) Anmeldetag: 21.02.1998
(51) Int. Cl.: G07C 5/00

(54) **Verfahren zur Bestimmung des Zeitpunktes für Schmierölwechsel bei Fahrzeugen**

(30) Priorität: 21.03.1997 DE 19711880
(71) Anmelder: MAN NUTZFAHRZEUGE AG, 80995 München (DE)
(72) Erfinder: Porst, Armin Dr., 90441 Nürnberg (DE)

(57) **Zusammenfassung**

Die Erfindung bezieht sich auf ein Verfahren zur Bestimmung des Zeitpunktes für Schmierölwechsel bei Fahrzeugen. Um das Schmieröl optimal zu nutzen, ohne Schäden an der Brennkraftmaschine zu riskieren muß die Beschaffenheit des Schmieröls ständig überwacht werden, ohne daß hierfür übermäßiger baulicher Aufwand getrieben werden kann. Erfindungsgemäß wird dies dadurch gelöst, daß die Wirksamkeit des Schmieröls durch kontinuierliches Erfassen der Dielektrizitätskonstanden ε₂, der Viskosität und der elektrischen Leitfähigkeit des im Schmierölkreislaufes der Brennkraftmaschine befindlichen Schmieröls überprüft wird, daß diese Parameter ständig mit den im Fahrzeugversuch experimentell ermittelten Werten der Dielektrizitätskonstante ε₁ der Viskosität und der elektrischen Leitfähigkeit als Funktion der Öl - h verglichen werden und daß bei vorgegebener Abweichung dieser Parameter von den im Fahrzeugversuch ermittelten Parametern eine Anzeige für Ölwechsel erfolgt. Durch das Messen der vorgenannten Parameter läßt sich eine zuverlässige Entscheidung über einen Ölwechsel treffen. Der Ölwechsel wird dadurch nicht zu früh durchgeführt, aber es braucht auch nicht befürchtet werden, daß die Brennkraftmaschine durch zu späten Ölwechsel Schaden nimmt.

## Beschreibung

Die Erfindung bezieht sich auf ein Verfahren zur Bestimmung des Zeitpunktes für Schmierölwechsel bei Fahrzeugen.

Aus DE 32 28 195 A1 ist es bekannt den Zeitpunkt für den Ölwechsel aus diversen Motorparametern, wie Drehzahl und Motorlast zu berechnen. Drehzahl und Motorlast werden mittels Sensoren erfaßt und einem Bordrechner zugeführt, welcher daraus mittels empirisch gewonnener Funktionen die im Schmieröl vorhandene Rußmenge errechnet. Überschreitet diese rechnerisch ermittelte Rußmenge eine vorgegebene Menge an Ruß, so wird eine Anzeige ausgelöst, welche dem Fahrer den notwendigen Ölwechsel anzeigt. Ein derartiges Verfahren ist nicht nur sehr aufwendig, sondern auch unzuverlässig, da die tatsächlich im Betrieb anfallende Rußmenge im Schmieröl nur sehr schwer und ungenau durch rechnerische Verfahren zu erfassen ist.

Der Erfindung liegt die Aufgabe zugrunde, ein Verfahren zu entwickeln, das auf möglichst einfache, aber dennoch zuverlässige Art und Weise einen notwendigen Olwechsel anzeigt.

Gelöst wird diese Aufgabe durch die kennzeichnenden Merkmale des Patentanspruches 1.

Durch den Vergleich der Dielektrizitätskonstante ε₂, sowie Parametern wie Viskosität und elektrischer Leitfähigkeit, welche neben anderen Parametern, wie z.B. Metallabrieb auch von der Rußmenge abhängen, mit den empirisch durch Fahrzeugversuch als Funktion der Betriebsdauer gewonnenen Werten für die Dielektrizitätskonstante, die Viskosität und die elektrische Leitfähigkeit läßt sich aus der Abweichung der Ist-Werte von den Soll-Werten eine zuverlässige Aussage über die Wirksamkeit des Schmieröls und den Zeitpunkt für einen notwendigen Schmierölwechsel treffen.

Am Beispiel der Dielektrizitätskonstanten ε₁ wird die Abweichung des Ist-Wertes ε₂ vom Soll-Wert ε1 als Funktion der Öl - h in einem Diagramm gezeigt. Das Diagramm enthält zwei Funktionen ε₁ und ε₂. Die Dielektrizitätskonstante ε₁ folgt einer Geradengliederung und wird experimentell durch Fahrzeugversuche ermittelt.

Erfindungsgemaß ermittelt man die relative Dielektrizitätskonstante εᵣ des im Schmierölkreislauf befindlichen Öls. Diese folgt der Kurve ε₂, welche nach einer bestimmten Betriebszeit ( Öl -h) von ε₁ abweicht. ε₂ wird kontinuierlich erfaßt und einem Bordrechner zugeführt. Stellt nun der Bordrechner eine vorgegebene Abweichung des Funktionswertes ε₂ von der Geraden ε₁ fest, so gibt er ein Zeichen für einen notwendigen Ölwechsel. In dem als Beispiel dargestellten Diagramm weicht ε₂ nach ca. 135 Öl - h von der Geraden ε₁ ab.

Ebenso wie mit dem Parameter εr wird mit den Parametern Viskosität und elektrischer Leitfähigkeit verfahren. Bei der Viskosität hat sich für die Soll-Kurve als Funktion der Öl - h eine Parabel 2-ten Grades ergeben.

Die elektrische Leitfähigkeit laßt sich als Funktion der Öl - h durch ein Polynom n-ten Grades darstellen.

Durch Abweichung der mittels Sensoren ermittelten Ist - Werte für Viskosität und elektrischen Leitfähigkeit von den Soll-Werten läßt sich wiederum eine Aussage über den notwendigen Ölwechsel treffen. Da die Verfahrensweise die gleiche wie für εᵣ ist wurde auf eine zeichnerische Darstellung verzichtet.

## Patentansprüche

1. Verfahren zur Bestimmung des Zeitpunkts für Schmierölwechsel bei Fahrzeugen, dadurch gekennzeichnet, daß die Wirksamkeit des Schmieröls durch kontinuierliches Erfassen der Dielektrizitätskonstanten ε₂, der Viskosität und der elektrischen Leitfähigkeit des im Schmierölkreislaufes der Brennkraftmaschine befindlichen Schmieröls erfaßt wird, daß diese Parameter ständig mit den im Fahrzeugversuch experimentell ermittelten Werten der Dielektrizitätskonstante ε₁ der Viskosität und der elektrischen Leitfähigkeit als Funktion der Öl - h verglichen werden und daß bei vorgegebener Abweichung dieser Parameter von den im Fahrzeugversuch ermittelten Parametern eine Anzeige für Ölwechsel erfolgt.

2. Verfahren nach Anspruch 1, dadurch gekennzeichnet, daß die Dielektrizitätskonstante ε₂, die Viskosität und die elektrische Leitfähigkeit mittels im Schmierölkreislauf befindlicher und von Öl durchströmten Sensoren ermittelt wird.
